# EUROPÄISCHE PATENTANMELDUNG

(11) **EP 2 546 174 A1**
(43) Veröffentlichungstag der Anmeldung: **16.01.2013**
(21) Anmeldenummer: 12004924.2
(22) Anmeldetag: 03.07.2012
(51) Int. Cl.: B65G 15/34, B65G 17/02, B32B 27/12

(54) **Spreizband für Förderer**

(30) Priorität: 09.07.2011 DE 202011103071 U
(71) Anmelder: MÄRTENS Transportbänder GmbH, 24941 Flensburg (DE)
(72) Erfinder: Kallsen, Benjamin, 24405 Mohrkirch (DE); Carstensen, Oliver, 24975 Hürup (DE)
(74) Vertreter: Lobemeier, Martin Landolf

(57) **Zusammenfassung**

Spreizband mit einer elastischen Gewebebahn, einer auf diese aufgebrachten Beschichtung und in Längsrichtung beidseitig angeordneten Lochstreifen, in die jeweils eine Laschenkette eingreift, dadurch gekennzeichnet, dass die Beschichtung aus einem Polyurethan besteht.

## Beschreibung

Die Erfindung betrifft ein mit einer elastischen Gewebebahn versehenes Spreizband.

Spreizbänder dienen dazu, ein Gut, insbesondere ein Lebensmittel, nach dessen Aufbringen auf ein Förderband voneinander zu beabstanden, beispielsweise um diese weiter zu verarbeiten oder zu verpacken.

Derartige Spreizbänder sind mit einer elastischen Gewebebahn, einer auf diese aufgebrachten Beschichtung und in Längsrichtung beidseitig angeordnete Lochstreifen, in die jeweils eine Laschenkette eingreift, versehen.

Die elastische Gewebebahn ist dabei regelmäßig mit einer Beschichtung versehen, die entsprechend elastisch ausgebildet ist, heute findet insbesondere Silikon Verwendung.

Die Verwendung von Silikon hat jedoch den Nachteil, dass dessen Aufbringung kritisch ist und besondere Maßnahmen gegen eine Alterung des Materials ergriffen werden müssen.

Der Erfindung liegt die Aufgabe zugrunde, ein Spreizband der eingangs genannten Art zu schaffen, dessen Beschichtung unproblematisch ist.

Erfindungsgemäß wird diese Aufgabe dadurch gelöst, dass die Beschichtung aus einem Polyurethan besteht.

Die Beschichtung kann eine auf die Gewebebahn aufkaschierte PU-Folie sein, die Beschichtung kann jedoch alternativ durch eine auf die Gewebebahn aufgesprühte PU-Lösung gebildet sein oder aber durch Aufrakeln eines PU-Gießharzes auf die Gewebebahn gebildet sein.

Die Erfindung nutzt den Umstand, dass Polyurethan ein nicht toxisches Material ist, das bei einem ausreichen dünnen Auftrag dauerelastisch ist.

Zum Aufbringen des Polyurethans als diese beschichtende Gewebebahn kommt das Aufkaschieren einer PU-Folie in Betracht. Alternativ kann eine Polyutethanlösung auf die Gewebebahn aufgesprüht werden, nach Austreten des Lösungsmittels besteht die Beschichtung dann aus dem Polyurethan.

Weiter kommt in Betracht, dass die Beschichtung durch Aufrakeln eines PU-Gießharzes auf die Gewebebahn gebildet wird.

Die Beschichtung kann einseitig oder beidseitig (Lauf- und Tragseite) vorgesehen sein.

## Patentansprüche

1. Spreizband mit einer elastischen Gewebebahn, einer auf diese aufgebrachten Beschichtung und in Längsrichtung beidseitig angeordneten Lochstreifen, in die jeweils eine Laschenkette eingreift,
**dadurch gekennzeichnet, dass**
die Beschichtung aus einem Polyurethan besteht.

2. Spreizband nach Anspruch 1, **dadurch gekennzeichnet, dass** die Beschichtung eine auf die Gewebebahn aufkaschierte PU-Folie ist.

3. Spreizbahn nach Anspruch 1, **dadurch gekennzeichnet, dass** die Beschichtung durch eine auf die Gewebebahn aufgesprühte PU-Lösung gebildete ist.

4. Spreizbahn nach Anspruch 1, **dadurch gekennzeichnet, dass** die Beschichtung durch Aufrakeln eines PU-Gießharces auf die Gewebebahn gebildet ist.
